**Europäisches Patentamt**

**European Patent Office**

**Office européen des brevets**

(11) Veröffentlichungsnummer: **0 164 557**
**B1**

(12) **EUROPÄISCHE PATENTSCHRIFT**

(45) Veröffentlichungstag der Patentschrift:
**16.08.89**

(21) Anmeldenummer: **85105407.2**

(22) Anmeldetag: **03.05.85**

(51) Int. Cl.⁴: **G 01 M 3/00,** G 21 C 17/00,
**F 17 D 3/00**

(54) **Selbstfahrendes Inspektions- und Wartungsfahrzeug.**

(30) Priorität: **14.05.84 DE 3417865**

(43) Veröffentlichungstag der Anmeldung:
**18.12.85 Patentblatt 85/51**

(45) Bekanntmachung des Hinweises auf die Patenterteilung:
**16.08.89 Patentblatt 89/33**

(84) Benannte Vertragsstaaten:
**CH DE FR GB LI NL**

(56) Entgegenhaltungen:
**EP-A- 0 076 435**
**EP-A- 0 085 504**
**DE-A- 2 210 356**
**FR-A- 1 594 219**
**FR-A- 2 522 148**
**GB-A- 2 102 565**
**GB-A- 2 105 048**
**US-A- 3 775 612**

(73) Patentinhaber: **Siemens Aktiengesellschaft,**
**Wittelsbacherplatz 2, D-8000 München 2 (DE)**

(72) Erfinder: **Röhrich, Heinz, Dipl.-Ing., Quellweg 22a,**
**D-8500 Nürnberg 90 (DE)**
Erfinder: **Dippold, Clemens, Dipl.-Ing., Köhlerstrasse 2,**
**D-8600 Bamberg (DE)**
Erfinder: **Gebald, Georg, Ahornweg 11,**
**D-8551 Kirchehrenbach (DE)**

**Beschreibung**

Die Erfindung bezieht sich auf ein selbstfahrendes Inspektions- und Wartungsfahrzeug für Rohrleitungsanlagen mit einem Fahrzeugkörper und einen den Fahrzeugkörper an der Innenoberfläche der Rohrleitung federnd abstützenden Fahrwerk, wobei der Fahrzeugkörper ein starres, dicht verschlossenes und mit einer eigenen Stromversorgung versehenes Gehäuse ist, und dem Fahrwerk mindestens ein von der Stromversorgung gespeister Elektromotor zugeordnet ist.

Aus der US-A 3 775 612 ist ein Fahrzeug zur Inspektion von Rohrleitungen bekannt, das einen Fahrzeugkörper und ein den Fahrzeugkörper an der Innenoberfläche der Rohrleitung federnd abstützendes Fahrwerk aufweist, wobei der Fahrzeugkörper aus einem starren, mit einer eigenen Stromversorgung versehenen Gehäuse gebildet ist, und dem Fahrwerk mindestens ein von der Stromversorgung gespeister Elektromotor zugeordnet ist. Das bekannte Fahrzeug besitzt vorne und hinten je drei Räder, von denen jedes mit einem Antriebmotor verbunden ist. Auf dem Fahrzeug ist eine Röntgenprüfeinrichtung angeordnet. Zur Steuerung des Fahrzeugs dient ein drahtloses Befehlsübertragungssystem, so dass man ohne nachzuschleppende Kabel auskommt. Bei dem bekannten Befehlsübertragungssystem werden jedoch elektrische Steuersignale in Schallimpulse umgewandelt, die über die Rohrleitungswand zu einem Empfänger auf dem Fahrzeug übertragen werden, so dass sich durch äussere Einwirkungen in Form von mechanischen Schwingungen Störungen in der Befehlsübertragung ergeben können.

Aus der EP-A 0 076 435 ist ein Rohrinnen-Manipulator mit einem Schreitwerk bekannt, der eine Fernsehkamera zur Wand- und Schweissnahtkontrolle aufweist. Die für den Manipulator erforderliche Energie sowie die Steuerbefehle werden über ein Schleppkabel zugeführt, so dass sein Aktionsbereich allein schon wegen des mit zunehmender Entfernung vom Ausgangspunkt wachsenden Reibungswiderstandes des nachzuziehenden Kabels an den Rohrwänden begrenzt ist. Diese Reibkraft verstärkt sich besonders nach dem Durchfahren mehrerer Rohrkrümmer, oder wenn das Inspektionsfahrzeug senkrecht stehende Rohrstrecken durchfahren muss und dann ausser seinem Eigengewicht und dem Reibungswiderstand des nachzuziehenden Kabels auch noch das Gewicht des senkrecht hängenden Abschnitts dieses Kabels hochziehen muss.

In der GB-A 2 102 565 ist ein Inspektionsfahrzeug für Rohrleitungen beschrieben, bei dem der Fahrzeugkörper aus einem geschlossenen Gehäuse besteht, das einen Elektromotor einschliesst. An der Vorderfront ist dieses bekannte Inspektionsfahrzeug mit einer Lichtquelle und mit Lichtfühlern versehen, die insbesondere auf Hindernisse ansprechen und über eine Steuereinrichtung mit der Antriebseinrichtung des Fahrzeugs in der Weise einwirken, dass der Antriebsmotor stillgesetzt wird. Auch hierbei wird die Antriebsenergie über ein nachzuschleifendes Kabel an das Inspektionsfahrzeug geführt, wobei auch Leitungen zur Steuerung des Fahrzeuges mitgeführt werden.

Der Erfindung liegt die Aufgabe zugrunde, ein selbstfahrendes Inspektions- und Wartungsfahrzeug für die Innenoberflächen von Rohrleitungsanlagen zu schaffen, dessen Reichweite deutlich grösser als jene bekannter Inspektions- und Wartungsfahrzeuge ist. Das Fahrzeug soll dabei frei von den Nachteilen eines nachzuziehenden Energieversorgungskabels oder der Übertragung von Steuerbefehlen durch Funk oder Schallwellen sein.

Eine Lösung der Aufgabe besteht bei einem selbstfahrenden Inspektions- und Wartungsfahrzeug für Rohrleitungsanlagen der eingangs genannten Art erfindungsgemäss darin, dass der Fahrzeugkörper an seiner in Einschubrichtung in die Rohrleitung vorderen Stirnseite eine Fernsehkamera und mindestens eine dem Sichtbereich der Fernsehkamera zugeordnete Lichtquelle trägt und mit mindestens einem Fühler zum Aufspüren von Hindernissen versehen ist und dass der Fühler an eine Schalteinrichtung für die Umsteuerung der Antriebsrichtung angeschlossen ist.

Eine zweite Lösung besteht darin, dass der Fahrzeugkörper an seiner in Einschubrichtung in die Rohrleitung vorderen Stirnseite eine Fernsehkamera und mindestens eine dem Sichtbereich der Fernsehkamera zugeordnete Lichtquelle trägt und dass der Fahrzeugkörper zur rechtzeitigen Entdeckung von wesentlichen Querschnittsveränderungen, wie z.B. Einmündungen in Behältern oder T-Stücken an seiner vorderen Stirnseite auf die beleuchtete Rohrwand ausgerichtete, mit der Lichtquelle abgestimmte Detektoren trägt und dass die Detektoren an eine Steuerlogik zur Umsteuerung der Antriebsrichtung angeschlossen sind.

Eine dritte Lösung ist dadurch gekennzeichnet, dass der Fahrzeugkörper an seiner in Einschubrichtung in die Rohrleitung vorderen Stirnseite eine Fernsehkamera zugeordnete Lichtquelle trägt, und dass die Antriebsrichtung bei überhöhter Stromaufnahme der Antriebsmotoren über eine Steuerlogik umschaltbar ist.

Allen drei Lösungen ist gemeinsam, dass man mit einem Steuersystem ohne Schleppkabel auskommt, so dass das Fahrzeug grössere Wegstrecken als bisher zurücklegen kann. Da bei dem erfindungsgemässen Inspektions- und Wartungsfahrzeug eine Fernsteuerung mittels Schallwellen oder Funk vermieden wird, kann das Fahrzeug auch in Rohrleitungen eingesetzt werden, die in grosser Tiefe unter Wasser oder unter der Erdoberfläche liegen. Die mitgeführte Fernsehkamera nebst Beleuchtungseinrichtung und der im Fahrzeugkörper eingebaute Videorekorder erlauben es, die Inspektionsfahrt nach Rückkunft des Inspektionsfahrzeuges vor einem Fernsichtgerät anhand der Aufzeichnungen des Videorekorders auszuwerten.

Durch eine gekapselte Bauweise wird die Voraussetzung geschaffen, um Inspektions- und Wartungsaufgaben in wassergefüllten Rohrabschnitten durchzuführen.

Die separate Anpressung der einzeln an Federbeinen gelagerten Räder an die Rohrinnenwand und der Allradantrieb gewährleisten eine auch für senkrecht verlaufende Steigleitungen ausreichend grosse Vortriebskraft. Die Arbeitszylinder erleichtern dem Einschub des selbstfahrenden Inspektions- und Wartungsfahrzeuges in ein einseitiges offenes Rohrende, indem sie die Federbeine pneumatisch oder hydraulisch entgegen der Kraft ihrer Druckfedern an den Fahrzeugkörper heranziehen.

Die Verwendung eines an der vorderen Stirnseite des Fahrzeugkörpers in der Symmetrieachse desselben axial verschiebbaren Abschaltrahmens ermöglicht es, in der Rohrleitung befindliche Hindernisse zu erfühlen und die Fahrrichtung rechtzeitig umzukehren.

Die durch Durchbrüche im Abschaltrahmen hindurchgeführten und/oder am Abschaltrahmen befestigten, von der Batterie gespeiste Lichtquellen ermöglichen es den auf den unmittelbar vorgelagerten Wandbereich ausgerichteten Fotodetektoren, Hindernisse aufzuspüren. Auf diese Weise können nicht nur erhabene Hindernisse, sonder auch T-Stücke und Einmündungen des Rohres in einen Behälter erkannt und selbsttätig zu einer Antriebsumkehr benutzt werden. So kann beispielsweise verhindert werden, dass das Inspektionsfahrzeug bei der Einmündung des Rohres in einen Behälter in diesen hineinfällt.

Die mitgeführte Fernsehkamera nebst Beleuchtungseinrichtung und der im Fahrzeugkörper eingebaute Videorecorder erlauben es, die Inspektionsfahrt nach Rückkunft des Inspektionsfahrzeuges vor einem Fernsehgerät anhand der Aufzeichnungen des Videorecorders auszuwerten.

Weitere Einzelheiten der Erfindung werden anhand zweier in den Figuren dargestellter Ausführungsbeispiele erläutert. Es zeigen:

Fig. 1 ein in eine trichterförmige Rohrschleuse eingesetztes erfindungsgemässes Inspektions- und Wartungsfahrzeug in schaubildlicher Seitenansicht und

Fig. 2 ein anderes, einen Rohrbogen durchfahrendes erfindungsgemässes Inspektions- und Wartungsfahrzeug in schaubildlicher Seitenansicht.

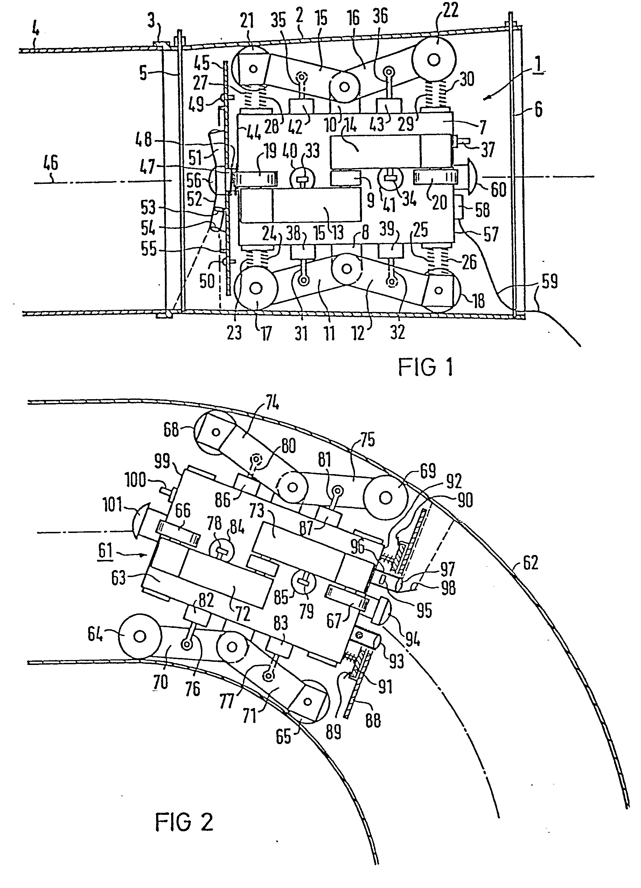

In der Fig. 1 ist ein erfindungsgemässes Inspektions- und Wartungsfahrzeug 1 zu erkennen, welches gerade in eine trichterförmige Rohrschleuse 2 eingeschoben worden ist. Die Rohrschleuse 2 ist über einen Führungsring 3 auf das offene Ende der zu inspizierenden Rohrleitung 4 aufgesetzt. Sie ist an ihren beiden Enden mit einem Verschlussschieber 5, 6 ausgerüstet. Der zylindrische, allseitig wasserdicht geschlossene Fahrzeugkörper 7 trägt in Höhe seiner halben Länge vier am Umfang um 90° gegeneinander versetzt angeordnete Tragösen 8, 9, 10 (nur drei Stück sichtbar). An jeder der Tragösen sind zwei Federbeine 11 bis 16 angelenkt. Diese tragen an ihrem freien Ende, etwa in Höhe einer Stirnseite des Fahrzeugkörpers 7 jeweils ein Rad 17 bis 22. Die Federbeine werden im Ausführungsbeispiel der Fig. 1 durch Druckfedern 23 bis 30 an die Innenwand der Rohrleitung 4 bzw. der Rohrschleuse 2 gedrückt. Sie sind darüber hinaus mit der Kolbenstange 31 bis 36 eines über einen Anschlussstutzen 37 mit Druckluft beaufschlagbaren Arbeitszylinder 38 bis 43 gekuppelt.

Vor der in Einschubrichtung vorderen Stirnseite 44 des Fahrzeugkörpers 7 trägt dieser im Ausführungsbeispiel einen schildartigen Abschaltrahmen 45. Der Abschaltrahmen 45 hat einen kreisscheibenförmigen Querschnitt, der 40 bis 100 m kleiner ist als der Innendurchmesser der zu befahrenden Rohrleitung 4. Der Abschaltrahmen ist längs eines an der vorderen Stirnseite 44 des Fahrzeugkörpers 7 koaxial zu dessen Symmetrieachse 46 befestigten Rohrstutzen 47 um einige Millimeter entgegen der Kraft einer Feder 48 verschiebbar gelagert. Über seine Relativbewegung zum Fahrzeugkörper 7 ist ein Umschalter (nicht dargestellt) für die Antriebsrichtung der Räder 17 bis 22 betätigbar.

Auf dem in der Fig. 1 dargestellten Abschaltrahmen sind mehrere Lichtquellen 49, 50 (nur zwei dargestellt) montiert. Ausserdem trägt der Abschaltrahmen mehrere Fotodetektorgehäuse 51, 52 (nur zwei dargestellt). Diese beinhalten je einen Fotodetektor 53, dessen Gesichtsfeld durch eine Linse 54 auf den unmittelbar dem Abschaltrahmen 45 vorgelagerten Wandbereich der Rohrleitung 4 gerichtet ist. Ein auf den Abschaltrahmen 45 befestigter Blendring 55 schirmt die Lichtquellen 49, 50 zu den Fotodektoren 53 hin ab. In dem koaxial zur Symmetrieachse 46 des Fahrzeugkörpers 7, an dessen vorderen Stirnseite 44 befestigten Rohrstutzen 47 befindet sich die Optik 56 einer im Fahrzeugkörper 7 befindlichen Fernsehaufnahmekamera (nicht dargestellt). An der in Einschubrichtung rückwärtigen Stirnseite 57 des selbstfahrenden Inspektionsfahrzeuges 1 ist eine Kabelhalterung 58 und ein an der Kabelhalterung befestigtes Signalkabel 59 zu erkennen. Ausserdem ist im Ausführungbeispiel ein Puffer 60 an der Einschubrichtung rückwärtigen Stirnseite 57 des Fahrzeugkörpers 7 in axialer Richtung verschiebbar gelagert. Dieser Puffer ist mit einer Abschaltvorrichtung (nicht dargestellt) für den Antrieb und die übrigen Bausteine des Inspektions- und Wartungsfahrzeuges in der Weise gekuppelt, dass diese beim Eindrücken des Puffers abgeschaltet werden.

Soll ein Rohrstück oder eine Rohrleitung mit dem Inspektions- und Wartungsfahrzeug 1 inspiziert werden, so wird, falls das nicht schon geschehen ist, ein im Durchmesser einige Millimeter (ca. 75 mm) kleiner als die lichte Weite der Rohrleitung gewählter Abschaltrahmen 45 auf dem der vorderen Stirnseite 44 des Fahrzeugkörpers befindlicher Rohrstutzen 47 aufgesetzt. Sodann wird das Inspektions- und Wartungsfahrzeug über den Anschlussstutzen 37 mit Pressluft beaufschlagt. Das führt dazu, dass die Arbeitszylinder 38 bis 43 die Federbeine 11 bis 16 über die Kolbenstangen 31 bis 36 entgegen der Kraft der Druckfedern 23 bis 30 an den Fahrzeugkörper 7 heranziehen. Das selbstfahrende Inspektions- und Wartungsfahrzeug kann nunmehr ohne weiteres in das offene Rohrende eingesetzt werden. Nach dem Ablassen der Pressluft werden die Räder 17 bis 22 des Inspektions- und Wartungsfahrzeuges 1 durch die Druckfedern 23 bis 30 wieder in die Rohrinnenwand angedrückt und das Inspektions- und Wartungsfahrzeug somit zur Symmetrieachse des zu inspizierenden Rohres zentriert. Beim Einschalten des Inspektions- und Wartungsfahrzeuges durch Herausziehen des an der rückwärtigen Stirnseite 57 desselben befindlichen Puffers 60, beginnt dieses seine Inspektionsfahrt. Es wäre auch möglich, das Inspektions- und Wartungsfahrzeug 1 mit Hilfe einer auf dem offenen Rohrende aufgesetzten trichterförmigen Rohrschleuse 2 einzuführen. In diesem Fall wird keine Pressluft benötigt, weil die Räder die Federbeine beim Einschieben in die sich trichterförmig verengende Rohrschleuse entsprechend zurückdrücken.

Während der Inspektionsfahrt beleuchten die Lichtquellen 49, 50 den vor dem Inspektionsfahrzeug befindlichen Rohrabschnitt der Rohrleitung 4. Die von der Fernsehkamera während der Fahrt aufgenommenen Bilder des dem Inspektions- und Wartungsfahrzeug jeweils vorgelagerten, beleuchteten Rohrleitungsabschnittes werden dabei zusammen mit Daten über die zurückgelegte Wegstrecke von dem im Fahrzeugkörper 7 eingebauten Videorecorder aufgezeichnet. Die vom Inspektions- und Wartungsfahrzeug zurückgelegte Wegstrecke wird von einem mit einem der Räder gekuppelten Wegmessfühler aufgenommen. Dies hat zur Folge, dass bei der Auswertung des Videobandes entdeckte Fehlstellen über die Angabe der bis dahin zurückgelegten Wegstrecke lokalisiert werden können. Dadurch wird es möglich, schadhafte Rohrstellen später gezielt auszuwechseln.

Befinden sich im Rohr irgendwelche Hindernisse, die die Weiterfahrt des Inspektionsfahrzeugs behindern könnten, so verschieben diese den Abschaltrahmen 45 beim Anstossen auf den Rohrstutzen 47 und lösen so eine Umkehr der Fahrtrichtung des Inspektions- und Wartungsfahrzeuges aus. Hierdurch wird verhindert, dass das sich selbst überlassene Inspektions- und Wartungsfahrzeug auf Hindernisse auffahren und sich im Rohr verklemmen kann. Als zusätzliche Schutzmassnahme sind auf dem Abschaltrahmen 45 Fotodetektorgehäuse 51, 52 montiert. Das Blickfeld der darin eingebauten Fotodetektoren 53 (nur einer dargestellt) ist über eine Linse 54 auf die dem Inspektions- und Wartungsfahrzeug unmittelbar vorgelagerte Innenwand der Rohrleitung ausgerichtet. Hierdurch werden zusätzlich zur mechanischen Entlastung von Hindernissen durch den Abschaltrahmen auch unterschiedliches Reflektionsverhalten als Umschaltkriterium für die Fahrtrichtung herangezogen. Nähert sich beispielsweise das Inspektions- und Wartungsfahrzeug einem T-Stück oder der Einmündung in einem Behälter, so fehlt plötzlich das Reflexionssignal eines der Fotodetektoren. Durch die dadurch ausgelöste Umschaltung der Antriebsrichtung wird verhindert, dass das Inspektionsfahrzeug in den Behälter oder das T-Stück hineinfallen kann.

Bei der Rückfahrt des Inspektionsfahrzeuges läuft dieses solange zurück, bis es mit seinen an der rückwärtigen Stirnseite 57 befindlichen Puffer 60 an dem geschlossenen Verschlussschieber 6 der Rohrschleuse 2 anstösst und sich dabei abschaltet. Nunmehr kann das Inspektionsfahrzeug 1 aus der Rohrschleuse 2 entnommen und das Ergebnis der Inspektion, d.h. die auf dem Videorecorder aufgezeichneten Fernsehbilder der Inspektionsfahrt in Ruhe am Schreibtisch vor einem Videosichtgerät ausgewertet werden. Bei der Inspektion von verhältnismässig kurzen Leitungsabschnitten kann das Inspektionsfahrzeug auch über ein Signalkabel direkt an ein Fernsehsichtgerät angeschlossen werden. In diesem Fall kann die Inspektionsfahrt sozusagen «life» mitverfolgt werden und können auch Steuerbefehle ausgeführt werden. Dieses Signalkabel kann auch dünner gehalten und auch leichter sein als ein Stromversorgungskabel. Durch die wasserdichte Ausführung des Fahrzeugkörpers können auch Inspektionsfahrten in unter Wasser stehenden Rohrleitungsabschnitten vorgenommen werden, so dass deren Entleerung unterbleiben kann.

In der Fig. 2 ist ein anderes erfindungsgemässes Inspektions- und Wartungsfahrzeug, das gerade einen Rohrbogen 62 durchläuft, gezeigt. Auch hier stützt sich der zylindrische Fahrzeugkörper 63 über Rädern 64 bis 69 an der Rohrinnenwand ab. Diese Räder sind in gleicher Weise am freien Ende von je einem Federbein 70 bis 75 gelagert, wie das anhand des Ausführungsbeispiels der Fig. 1 beschrieben wurde. Jedes Federbein ist mit der Kolbenstange 76 bis 81 eines Arbeitszylinders 82 bis 87 gekuppelt. Die Anpressung der Federbeine und damit der Räder an die Rohrinnenwandung erfolgt jedoch über je eine im Innern des Fahrzeugkörpers 63 befindliche Gasfeder (nicht dargestellt), die an der Kolbenstange 76 bis 81 der Arbeitszylinder 82 bis 87 angekuppelt ist. Im Unterschied zum Ausführungsbeispiel der Fig. 1 ist der Abschaltrahmen 88 lediglich als Ringscheibe ausgebildet. Er ist mittels federnder Haltebügel 89, 90 auf einen Tragring 91 aufsteckbar, der seinerseits federnd an der vorderen Stirnseite 92 des Fahrzeugkörpers 63 gelagert und mit einer hier nicht dargestellten Umschaltung für die Antriebsrichtung der Räder gekuppelt ist.

Die Lichtquelle 93 (nur eine dargestellt) für die Beleuchtung der Rohrleitung ebenso wie die Optik 94 für die Fernsehkamera (nicht dargestellt), sowie die Fotodetektoren 95 (nur eine dargestellt), sind durch die zentrale Öffnung des Abschaltrahmens 88 hindurchgeführt. Dabei beinhalten die abwechselnd mit den Lichtquellen 93 um die zentral angeordnete Optik 94 für die Fernsehkamera herum angeordnete Optik 94 für die Fernsehkamera herum angeordneten Gehäuse 96 für die Fotodetektoren 95 ausser dem Fotodetektor noch eine Linse 97 und einen Spiegel 98 durch die der Aufnahmebereich der Fotodetektoren auf die dem Inspektions- und Wartungsfahrzeug 61 unmittelbar vorgelagerten Wandbereiche gerichtet ist.

Diese Konstruktion hat gegenüber dem Ausführungsbeispiel der Fig. 1 den Vorteil, dass je nach Innendurchmesser des zu inspizierenden Rohres einfache Abschaltrahmen 88 unterschiedlichen Aussendurchmessers auf den Tragring 91 aufsteckbar sind. Eine Umrüstung auf einen anderen Rohrdurchmesser ist daher denkbar einfach. Auch dieses Inspektionsfahrzeug ist auf seiner rückwärtigen Stirnseite 99 mit einem Anschlussstutzen 100 für Pressluft zum Anlegen der Federbeine an den Fahrzeugkörper 63 und mit einem Puffer 101 für die Abschaltung des Inspektions- und Wartungsfahrzeuges versehen. Im übrigen sind mit diesem Inspektions- und Wartungsfahrzeug die gleichen Vorteile verbunden, die schon anhand des Ausführungsbeispiels der Fig. 1 beschrieben wurde.

Der Abschaltrahmen 45, 88 kann auch entfallen. Dann sind aber die Lichtquellen 49, 50 die Fotodetektorgehäuse 51, 52, der Blendring 55 und die Optik unmittelbar an der in Fahrtrichtung vorderen Stirnseite des Fahrzeugkörpers 7 zu befestigen. Statt des Puffers 60, 101 kann auch ein manuell bedienbarer Schalter für den Antrieb des Inspektions- und Wartungsfahrzeuges 1, 61 vorgesehen sein. Es wäre auch möglich, jedem angetriebenen Rad einen eigenen Antriebsmotor zuzuordnen und diese aus Antriebsrad und Antriebsmotor bestehende Antriebseinheit jeweils längs einer radial zum Fahrzeugkörper ausgerichteten Führung verschiebbar zu lagern und über mindestens eine Feder vom Fahrzeugkörper wegzudrücken.

Bezugszeichenliste

| | |
|---|---|
| Inspektions- und Wartungsfahrzeug | 1 |
| trichterförmige Rohrschleuse | 2 |
| Führungsring | 3 |
| Rohrleitung | 4 |
| Verschlussschieber | 5, 6 |
| Fahrzeugkörper | 7 |
| Tragöse | 8, 9, 10 |
| Federbein | 11, 12, 13, 14, 15, 16 |
| Rad | 17, 18, 19, 20, 21, 22 |
| Druckfeder | 23, 24, 25, 26, 27, 28, 29, 30 |
| Kolbenstange | 31, 32, 33, 34, 35, 36 |
| Anschlussstutzen | 37 |
| Arbeitszylinder | 38, 39, 40, 41, 42, 43 |
| vordere Stirnseite | 44 |
| Abschaltrahmen | 45 |
| Symmetrieachse | 46 |
| Rohrstutzen | 47 |
| Feder | 48 |
| Lichtquelle | 49, 50 |
| Fotodetektor-Gehäuse | 51, 52 |
| Fotodetektor | 53 |
| Linse | 54 |
| Blendring | 55 |
| Optik | 56 |
| Rückwärtige Stirnseite | 57 |
| Kabelhalterung | 58 |
| Signalkabel | 59 |
| Puffer | 60 |
| Inspektions- und Wartungsfahrzeug | 61 |
| Rohrbogen | 62 |
| zylindrischer Fahrzeugkörper | 63 |
| Rad | 64 bis 69 |
| Federbein | 70 bis 75 |
| Kolbenstange | 76 bis 81 |
| Arbeitszylinder | 82 bis 87 |
| Abschaltrahmen | 88 |
| Haltebügel | 89, 90 |
| vordere Stirnseite | 92 |
| Lichtquelle | 93 |
| Optik | 94 |
| Fotodetektor | 95 |
| Gehäuse | 96 |
| Linse | 97 |
| Spiegel | 98 |
| Rückwärtige Stirnseite | 99 |
| Anschlussstutzen | 100 |
| Puffer | 101 |

Patentansprüche

1. Selbstfahrendes Inspektions- und Wartungsfahrzeug für Rohrleitungsanlagen mit einem Fahrzeugkörper und einem den Fahrzeugkörper an der Innenoberfläche der Rohrleitung federnd abstützenden Fahrwerk, wobei der Fahrzeugkörper (7, 63) ein starres, dicht verschlossenes und mit einer eigenen Stromversorgung versehenes Gehäuse ist, und dem Fahrwerk (11 bis 22, 64 bis 75) mindestens ein von der Stromversorgung gespeister Elektromotor zugeordnet ist, dadurch gekennzeichnet, dass der Fahrzeugkörper (7, 63) an seiner in Einschubrichtung in die Rohrleitung (4, 62) vorderen Stirnseite (44, 92) eine Fernsehkamera (56, 94) und mindestens eine dem Sichtbereich der Fernsehkamera zugeordnete Lichtquelle (49, 50, 93) trägt und mit mindestens einem Fühler (45, 88) zum Aufspüren von Hindernissen versehen ist und dass der Fühler (45, 88) an einer Schaltereinrichtung für die Umsteuerung der Antriebsrichtung angeschlossen ist.

2. Selbstfahrendes Inspektions- und Wartungsfahrzeug für Rohrleitungsanlagen mit einem Fahrzeugkörper und einem den Fahrzeugkörper an der Innenoberfläche der Rohrleitung federnd abstützenden Fahrwerk, wobei der Fahrzeugkörper (7, 63) ein starres, dicht verschlossenes und mit einer eigenen Stromversorgung versehenes Gehäuse ist, und dem Fahrwerk (11 bis 22, 64 bis 75) mindestens ein von der Stromversorgung gespeister Elektromotor zugeordnet ist, dadurch gekennzeichnet, dass der Fahrzeugkörper (7, 63) an seiner in Einschubrichtung in die Rohrleitung (4, 62) vorderen Stirnseite (44, 92) eine Fernsehkamera (56, 94) und mindestens eine dem Sichtbereich der Fernsehkamera zugeordnete Lichtquelle (49, 50, 93) trägt und dass der Fahrzeugkörper (7, 63) zur rechtzeitigen Entdeckung von wesentlichen Querschnittsveränderungen, wie z.B. Einmündungen in Behältern oder T-Stücken, an seiner vorderen Stirnseite (44, 92) auf die beleuchtete Rohrwand ausgerichtete, mit der Lichtquelle (43, 50, 93) abgestimmte Detektoren (53, 95) trägt und dass die Detektoren (53, 95) an eine Steuerlogik zur Umsteuerung der Antriebsrichtung angeschlossen sind.

3. Selbstfahrendes Inspektions- und Wartungsfahrzeug für Rohrleitungsanlagen mit einem Fahrzeugkörper und einem den Fahrzeugkörper an der Innenoberfläche der Rohrleitung federnd abstützenden Fahrwerk, wobei der Fahrzeugkörper (7, 63) ein starres, dicht verschlossenes und mit einer eigenen Stromversorgung versehenes Gehäuse ist, und dem Fahrwerk (11 bis 22, 64 bis 75) mindestens ein von der Stromversorgung gespeister Elektromotor zugeordnet ist, dadurch gekennzeichnet, dass der Fahrzeugkörper (7, 63) an seiner in Einschubrichtung in die Rohrleitung (4, 62) vorderen Stirnseite (44, 92) eine Fernsehkamera (56, 94) und mindestens eine dem Sichtbereich der Fernsehkamera zugeordnete Lichtquelle (49, 50, 93) trägt, und dass die Antriebsrichtung bei überhöhter Stromaufnahme der Antriebsmotoren über eine Steuerlogik umschaltbar ist.

4. Selbstfahrendes Inspektionsfahrzeug nach Anspruch 1, dadurch gekennzeichnet, dass mit Ausnahme eines als Wegmessfühler ausgebildeten Rades alle übrigen Räder (17 bis 22, 64 bis 69) angetrieben sind.

5. Selbstfahrendes Inspektionsfahrzeug nach Anspruch 4, dadurch gekennzeichnet, dass die Fahrzeugbewegung und/oder die zurückgelegte Wegstrecke über einen mit einen auf der Rohrinnenwand laufenden Rad gekuppelten Drehgeber aufgezeichnet und synchron mit dem Fernsehbild abspeicherbar ist.

6. Selbstfahrendes Inspektionsfahrzeug nach Anspruch 5, dadurch gekennzeichnet, dass einem mit einem auf der Rohrinnenwand frei laufenden Rad gekuppelten Drehgeber eine die Antriebsrichtung bei erzwungenem Stop umsteuernde Schaltlogik zugeordnet ist.

7. Selbstfahrendes Inspektionsfahrzeug nach Anspruch 1, dadurch gekennzeichnet, dass der Fahrzeugkörper (7, 63) an seiner in Einschubrichtung vorderen Stirnseite (44, 92) einen senkrecht zu seiner Symmetrieachse (46) ausgerichteten, in Richtung der Symmetrieachse am Fahrzeugkörper federnd gelagerten, mit seiner Aussenkontur in einem Abstand von wenigen Millimetern von der Innenoberfläche der Rohrleitung geführten Abschaltrahmen (45) trägt.

8. Selbstfahrendes Inspektionsfahrzeug nach Anspruch 1, dadurch gekennzeichnet, dass der Fühler zur Ortung von Hindernissen mit einem akustischen Sende- und Empfangssystem ausgerüstet ist.

9. Selbstfahrendes Inspektionsfahrzeug nach Anspruch 1, dadurch gekennzeichnet, dass am vorderen und hinteren Ende des Fahrzeugkörpers mindestens je drei um höchstens 120° um die zur Rohrachse fluchtende Symmetrieachse (46) des Fahrzeugkörpers (7, 63) gegeneinander versetzt angeordnete Räder (17 bis 32, 64 bis 69) befestigt sind und dass jedes der Antriebsräder (17 bis 22, 64 bis 69) am Ende je eines Federbeines (11 bis 16, 70 bis 75) drehbar gelagert ist.

10. Selbstfahrendes Inspektionsfahrzeug nach Anspruch 9, dadurch gekennzeichnet, dass jedes der Federbeine (11 bis 16, 70 bis 75) über mindestens eine Feder (23 bis 30) an der Rohrinnenwand andrückbar ist.

11. Selbstfahrendes Inspektionsfahrzeug nach Anspruch 10, dadurch gekennzeichnet, dass Gasfedern verwendet sind.

12. Selbstfahrendes Inspektionsfahrzeug nach Anspruch 9, dadurch gekennzeichnet, dass die Federbeine (11 bis 16, 70 bis 75) zur Einfädelung in ein Rohrende über mindestens einen hydraulisch oder pneumatisch betätigbaren Arbeitszylinder (38 bis 43, 82 bis 87) von der Rohrinnenwand zurückziehbar sind.

13. Selbstfahrendes Inspektionsfahrzeug nach Anspruch 1, dadurch gekennzeichnet, dass der Fahrzeugkörper (7, 63) wasserdicht gekapselt ist.

14. Selbstfahrendes Inspektionsfahrzeug nach Anspruch 1, dadurch gekennzeichnet, dass die Antriebsmotoren wasserdicht gekapselt sind.

15. Selbstfahrendes Inspektionsfahrzeug nach Anspruch 1, dadurch gekennzeichnet, dass ein an die Fernsehkamera angeschlossener Video-Recorder zur Speicherung der Fernsehbilder im Fahrzeugkörper (7, 63) eingebaut ist.

16. Selbstfahrendes Inspektionsfahrzeug nach Anspruch 1, dadurch gekennzeichnet, dass ein dünnes Signalkabel (59) zur Datenübermittlung am Fahrzeugkörper (7) anschliessbar ist.

17. Selbstfahrendes Inspektionsfahrzeug nach Anspruch 1, dadurch gekennzeichnet, dass der Fahrzeugkörper zur Ortung der Position des Inspektionsfahrzeuges im Rohr von ausserhalb des Rohres mit einem Radioisotop versehen ist.

18. Selbstfahrendes Inspektionsfahrzeug nach Anspruch 4, dadurch gekennzeichnet, dass mindestens eine Lichtquelle und ein Fotodetektor aufeinander ausgerichtet am Achsträger befestigt sind und zwischen ihnen eine mit dem freilaufenden Rad gekuppelte, mit Durchbrüchen versehene Scheibe hindurchdrehbar ist.

19. Selbstfahrendes Inspektionsfahrzeug nach Anspruch 5 oder 6, dadurch gekennzeichnet, dass die vom Drehgeber ermittelte, zurückgelegte Wegstrecke und/oder die Fahrzeugbewegung im Fernsehbild einblendbar ist.

20. Selbstfahrendes Inspektionsfahrzeug nach Anspruch 1, dadurch gekennzeichnet, dass Antriebsmotoren mitsamt den Antriebsrädern am Fahrzeugkörper radial verschiebbar gelagert sind.

## Claims

1. Automotive inspection and maintenance vehicle for pipeline systems, having a vehicle body and a chassis which supports the vehicle body against the inner surface of the pipeline by means of springs, wereby the vehicle body (7, 63) is a rigid, sealed housing which is provided with its own power supply, and at least one electric motor fed from the mains supply is associated with the chassis (11 to 22, 64 to 75), characterised in that the vehicle body (7, 63) carries on its front forward side (44, 92) relative to the direction of its insertion into the pipeline (4, 62), a television (56, 94) and at least one light source (49, 50, 93) which is co-ordinated with the television camera's range of vision, and is provided with at least one sensor (45, 88) for detecting obstacles, and that the sensor (45, 88) is connected to a switching device for reversing the direction of travel.

2. Automotive inspection and maintenance vehicle for pipeline systems, having a vehicle body and a chassis which supports the vehicle body against the inner surface of the pipeline by means of springs, whereby the vehicle body (7, 63) is a rigid, sealed housing which is provided with its own power supply, and at least one electric motor fed from the mains supply is associated with the chassis (11 to 22, 64 to 75), characterised in that the vehicle body (7, 63) carries on its front forward side (44, 92) relative to the direction of its insertion into the pipeline (4, 62), a television camera (56, 94) and at least one light source (49, 50, 93) which is co-ordinated with the television camera's range of vision, and that the vehicle body (7, 63), so that it can detect in time substantial changes in the cross-section, such as junctions in vessels or T-sections, carries on its front forward side (44, 92) detectors (53, 95) which are aligned on the illuminated pipe wall and synchronised with the light source (43, 50, 93), and that the detectors (53, 95) are connected to a control logic for reversing the direction of travel.

3. Automotive inspection and maintenance vehicle for pipeline systems, having a vehicle body and a chassis which supports the vehicle body against the inner surface of the pipeline by means of springs, whereby the vehicle body (7, 63) is a rigid, sealed housing which is provided with its own power supply, and at least one electric motor which is fed from the mains supply is associated with the chassis (11 to 22, 64 to 75), characterised in that the vehicle body (7, 63) carries on its front forward side (44, 92) relative to the direction of its insertion into the pipeline (4, 62), a television camera (56, 94) and at least one light source (49, 50, 93) which is co-ordinated with the television camera's range of vision, and that the direction of travel is reversible by way of a control logic when there is an increased current consumption by the drive motors.

4. Automotive inspection vehicle according to claim 1, characterised in that all wheels (17 to 22, 64 to 69) are powered, with the exception of one wheel constructed as position measuring sensor.

5. Automotive inspection vehicle according to claim 4, characterised in that the vehicle motion and/or distance covered is registered by way of a rotary transducer coupled to a wheel which runs along the inner wall of the pipe, and can be recorded synchronously with the television camera.

6. Automotive inspection vehicle according to claim 5, characterised in that a switching logic which reverses the direction of travel when a forced stop occurs, is associated with a rotary transducer coupled to a wheel which runs freely along the inner wall of the pipe.

7. Automotive inspection vehicle according to claim 1, characterised in that the vehicle body (7, 63) carries, on its front forward side (44, 92) relative to the direction of its insertion, a cut-off frame (45) which is aligned perpendicularly to its axis of symmetry (46), supported in the direction of the axis of symmetry against the vehicle body by means of springs, and conveyed so that its outer contour is separated by a few millimetres from the inner surface of the pipeline.

8. Automotive inspection vehicle according to claim 1, characterised in that the sensor is equipped with an acoustic transmitting and receiving system for locating obstacles.

9. Automotive inspection vehicle according to claim 1, characterised in that, attached at each of the front and rear ends of the vehicle body, are at least three wheels (17 to 32, 64 to 69), which are arranged offset from each other at a maximum of 120° to the axis of symmetry (46) of the vehicle body (7, 63), this axis aligning with the axis of the pipe, and that each of the drive wheels (17 to 22, 64 to 69) is mounted at the end of its respective spring leg (11 to 16, 70 to 75) so that it pivots.

10. Automotive inspection vehicle according to claim 9, characterised in that each of the spring legs (11 to 16, 70 to 75) can be pressed against the inner wall of the pipe by way of at least one spring (23 to 30).

11. Automotive inspection vehicle according to claim 10, characterised in that pneumatic springs are used.

12. Automotive inspection vehicle according to claim 9, characterised in that the spring legs (11 to 16, 70 to 75) can be drawn back from the inner wall of the pipe, by way of at least one hydraulically or pneumatically operable working cylinder (38 to 43, 82 to 87), for introduction into a pipe end.

13. Automotive inspection vehicle according to claim 1, characterised in that the vehicle body (7, 63) is watertight.

14. Automotive inspection vehicle according to claim 1, characterised in that the drive motors are watertight.

15. Automotive inspection vehicle according to claim 1, characterised in that a video recorder connected to the television camera is fitted in the vehicle body (7, 63) for storage of the television pictures.

16. Automotive inspection vehicle according to claim 1, characterised in that a thin signal cable (59) can be connected to the vehicle body (7) for data communication.

17. Automotive inspection vehicle according to claim 1, characterised in that the vehicle body is provided with a radioisotope for locating, from outside the pipe, the position of the inspection vehicle in the pipe.

18. Automotive inspection vehicle according to claim 4 or 13, characterised in that at least one light source and photodetector are attached to the axle support so that they are aligned with each other, and a disk can be pivoted through between them which is coupled with the free-running wheel and is provided with apertures.

19. Automotive inspection vehicle according to claim 5 or 6, characterised in that the distance covered, as determined by the rotary transducer, and/or the vehicle motion, can be overlaid on the television picture.

20. Automotive inspection vehicle according to claim 1, characterised in that the drive motors together with the drive wheels are mounted so that they can be radially adjusted.

## Revendications

1. Chariot automoteur d'inspection et d'entretien pour des installations de conduites tubulaires, comportant un corps et un mécanisme de roulement appliquant élastiquement le corps du chariot contre la surface intérieure de la conduite tubulaire, et dans lequel le corps (7, 63) du chariot est un carter rigide, fermé sur lui-même de façon étanche et comportant sa propre alimentation en courant, au moins un moteur électrique alimenté par l'alimentation en courant étant associé au mécanisme de roulement (11 à 22, 64 à 75), caractérisé par le fait que le corps (7, 63) du chariot porte, sur sa surface frontale (44, 92), qui est disposée en avant dans la direction d'insertion à l'intérieur de la conduite tubulaire (4, 62), une caméra de télévision (56, 94) et au moins une source de lumière (49, 50, 93) associée au champ de vision de la caméra de télévision, et comporte au moins un capteur (45, 88) servant à détecter des obstacles, et que le capteur (45, 88) est raccordé à un dispositif de commutation servant à inverser la direction de l'entraînement.

2. Chariot automoteur d'inspection et d'entretien pour des installations de conduites tubulaires, comportant un corps et un mécanisme de roulement appliquant élastiquement le corps du chariot contre la surface intérieure de la conduite tubulaire, et dans lequel le corps (7, 63) du chariot est un carter rigide, fermé sur lui-même de façon étanche, et comportant sa propre alimentation en courant, au moins un moteur électrique alimenté par l'alimentation en courant étant associé au mécanisme de roulement (11 à 22, 64 à 75), caractérisé par le fait que le corps (7, 63) du chariot porte, sur sa face frontale (44, 92), qui est disposée en avant dans la direction d'insertion à l'intérieur de la conduite tubulaire (4, 62), une caméra de télévision (56, 94) et au moins une source de lumière (49, 50, 93) associée au champ de vision de la caméra de télévision, et que le corps (7, 63) du chariot porte, sur sa face frontale avant (44, 92), pour réaliser la détection en temps opportun de modifications importantes de la section transversale, comme par exemple des embouchures de pénétration dans des récipients ou des éléments en T, des détecteurs (53, 95) orientés vers la paroi tubulaire éclairée et accordé sur la source de lumière (43, 50, 93), et que les détecteurs (53, 95) sont raccordés à un circuit logique de commande servant à inverser la direction d'entraînement.

3. Chariot automoteur pour des installations de conduites tubulaires, comportant un corps et un mécanisme de roulement appliquant élastiquement le corps du chariot contre la surface intérieure de la conduite tubulaire, et dans lequel le corps (7, 63) du chariot est un carter rigide, fermé sur lui-même de façon étanche et comportant sa propre alimentation en énergie, au moins un moteur électrique alimenté par l'alimentation en courant étant associé au mécanisme de roulement (11 à 22, 64 à 75), caractérisé par le fait que le corps (7, 63) du chariot porte, sur sa face frontale (44, 92), qui est disposée en avant dans la direction d'insertion à l'intérieur de la conduite tubulaire (4, 62), une caméra de télévision (56, 94) et au moins une source de lumière (49, 50, 93) associée au champ de vision de la caméra de télévision, et que la direction d'entraînement peut être commutée au moyen d'un circuit logique de commande, dans le cas d'une consommation excessive en courant du moteur d'entraînement.

4. Chariot automoteur d'inspection suivant la revendication 1, caractérisé par le fait qu'à l'exception d'une roue réalisée sous la forme d'un capteur du trajet de déplacement, toutes les autres roues (17 à 22, 64 à 69) sont motrices.

5. Chariot automoteur d'inspection suivant la revendication 4, caractérisé par le fait que le déplacement du chariot et/ou la partie de trajet parcourue peuvent être enregistrées au moyen d'un résolveur accouplé à une roue circulant sur la paroi intérieure de la conduite tubulaire et peuvent être mémorisés d'une manière synchrone avec l'image de télévision.

6. Chariot automoteur d'inspection suivant la revendication 5, caractérisé par le fait qu'un circuit logique de commutation qui inverse la direction d'entraînement dans le cas d'un arrêt imposé, est associé à un résolveur accouplé à une roue tournant librement contre la paroi intérieure de la conduite tubulaire.

7. Chariot automoteur d'inspection suivant la revendication 1, caractérisé par le fait que le corps (7, 63) du chariot porte, sur sa face frontale (44, 92), disposée en avant dans la direction d'insertion, un cadre de mise à l'arrêt (45), qui est perpendiculaire à l'axe de symétrie (46) du corps et est supporté élastiquement sur ce dernier, dans la direction de l'axe de symétrie et dont le contour extérieur est guidé à une distance de quelques millimètres de la surface intérieure de la conduite tubulaire.

8. Chariot automoteur d'inspection suivant la revendication 1, caractérisé par le fait que, pour la localisation d'obstacles, le capteur est équipé d'un système acoustique d'émission et de réception.

9. Chariot automoteur d'inspection suivant la revendication 1, caractérisé par le fait que respectivement au moins trois roues (17 à 32, 64 à 69), qui sont décalées les unes par rapport aux autres au plus de 120° autour de l'axe de symétrie (46), aligné avec l'axe de la conduite tubulaire, du corps (7, 63) du chariot, sont fixées sur l'extrémité avant et l'extrémité arrière du corps du chariot et que chacune des roues motrices (17 à 22, 64 à 69) est montée rotative sur l'extrémité d'un bras monté élastiquement (11 à 16, 70 à 75).

10. Chariot automoteur d'inspection suivant la revendication 9, caractérisé par le fait que chacun des bras montés élastiquement (11 à 16, 70 à 75) peut être repoussé contre la paroi intérieure de la conduite tubulaire par l'intermédiaire d'au moins un ressort (23 à 30).

11. Chariot automoteur d'inspection suivant la revendication 10, caractérisé par le fait qu'on utilise des ressorts pneumatiques.

12. Chariot automoteur d'inspection suivant la revendication 9, caractérisé par le fait que les bras montés élastiquement (11 à 16, 70 à 75) peuvent, en vue de leur insertion dans une extrémité de la conduite tubulaire, être rétractés par rapport à la paroi intérieure de la conduite tubulaire, par l'intermédiaire d'au moins un vérin de travail à commande hydraulique ou pneumatique (38 à 43, 82 à 87).

13. Chariot automoteur d'inspection suivant la revendication 1, caractérisé par le fait que le corps (7, 63) du chariot est encapsulé de manière à être étanche à l'eau.

14. Chariot automoteur d'inspection suivant la revendication 1, caractérisé par le fait que les moteurs d'entraînement sont encapsulés de façon étanche à l'eau.

15. Chariot automoteur d'inspection suivant la revendication 1, caractérisé par le fait qu'un enregistreur vidéo, raccordé à la caméra de télévision et servant à mémoriser les images de télévision, est monté dans le corps (7, 63) du chariot.

16. Chariot automoteur d'inspection suivant la revendication 1, caractérisé par le fait qu'un câble mince (59) de transmission de signaux, qui sert à transmettre des données, peut être relié au corps (7) du chariot.

17. Chariot automoteur d'inspection suivant la revendication 1, caractérisé par le fait que le corps du chariot est pourvu d'un radioisotope permettant de localiser, depuis l'extérieur de la conduite tubulaire, la position du chariot d'inspection dans cette conduite.

18. Chariot automoteur d'inspection suivant la revendication 4 ou 13, caractérisé par le fait qu'au moins une source de lumière et un photodétecteur sont fixés sur le support d'essieu et qu'un disque accouplé à la roue tournant librement et pourvu de perçages peut tourner entre ces deux éléments.

19. Chariot automoteur d'inspection suivant les revendications 5 ou 6, caractérisé par le fait que la partie du trajet parcouru, déterminée par le résolveur, et/ou le déplacement du chariot peuvent être incrustées dans l'image de télévision.

20. Chariot automoteur d'inspection suivant la revendication 1, caractérisé par le fait que des moteurs d'entraînement sont montés de manière à être déplaçables radialement dans le corps du chariot, conjointement avec les roues motrices.

FIG 1

FIG 2